# EUROPEAN PATENT SPECIFICATION

(11) **EP 1 911 306 B1**
(45) Date of publication and mention of the grant of the patent: **05.04.2017**
(21) Application number: 06765137.2
(22) Date of filing: 28.07.2006
(51) Int. Cl.: H04W 88/08, H04W 28/08, H04W 36/12, H04W 84/04, H04W 84/22, H04W 88/10, H04W 88/16, H04W 92/02, H04W 92/04, H04W 92/12, H04L 12/54

(54) **LOCAL AREA CELLULAR BASESTATION**
LOKALE ZELLULARE BASISSTATION
STATION DE BASE CELLULAIRE LOCALE

(30) Priority: 01.08.2005 GB 0515888; 30.05.2006 GB 0610650
(43) Date of publication of application: 16.04.2008
(60) Divisional application: 12173404.0
(73) Proprietor: Ubiquisys Limited, Swindon SN5 6NX (GB)
(72) Inventor: KEEVILL, Peter, Bath BA2 3NQ (GB); FRANKS, William, Pewsey, Wiltshire SN9 5LS (GB); BYRNE, Richard, Thatcham, Berkshire RG18 9HX (GB); GIUSTINA, Andrea, I-20129 Milano (IT)
(74) Representative: Noble, Nicholas
(86) International application number: PCT/GB2006/002819
(87) International publication number: WO 2007/015067

(56) References cited:
- EP-A- 1 049 340
- EP-A2- 0 766 427
- EP-A2- 1 267 524
- US-A1- 2003 058 818
- US-A1- 2003 119 489
- US-A1- 2005 088 999

## Description

This invention relates to a cellular basestation, and in particular to a basestation for a cellular communications network, that can conveniently be used to provide a cellular service, for example within a home or office.

Wide area cellular services for standards such as GSM and UMTS are generally provided from conventional basestations, which are capable of covering a large area (cell radius of many kilometres). However, coverage within buildings can be more challenging because of the RF attenuation of the building structure and radio shadowing effects from surrounding buildings. This coverage problem becomes more difficult for standards aiming to support medium to high speed data such as EDGE and UMTS, because of the higher signal-to-noise figures required for signals using high- order constellations or low spreading factors. Higher frequencies, such as those used for UMTS, also accentuate the problem, because these signals suffer greater attenuation through building structures.

Conventional solutions to these problems would be to deploy many more basestations and RF repeater systems to increase coverage within buildings and urban areas. These solutions become prohibitively costly and the additional aesthetic impact of many more basestations in populated areas creates objections from residents and additional legal expenses for operators. The use of short-range radio interfaces such as WiFi or Bluetooth to handle cellular traffic within a home or office is an alternative approach, but requires the customer or operator to invest in new handsets.

Recent figures suggest over 70% of all cellular calls are made within buildings so this issue presents some significant obstacles to the future growth of the cellular industry.

It is known to provide a wireless access point, for example in accordance with the IEEE 802.11 standard, which allows a computer user to make a wireless connection to a computer network, such as the internet, in order to be able to access data.

However, this type of wireless access point has the limitation that it does not allow access by any of the very large number of existing cellular mobile communications devices.

US2004/0204097 A1 discloses a low power basestation, for establishing a small area of wireless coverage within a macrocell network, for example within a building such as a customer's home or office. This basestation may be connected into a conventional wireless network infrastructure by means of an existing IP connection within the home or office.

However, this has the limitation that the user is able to use his mobile communications device only within that wireless network.

EP-1267524 A2 discloses a device for connection to a local area network in a small office or home. The device allows end-to-end telecommunications services between a wireless device and a device that is accessible over the user's broadband packet network connection.

US 2005/088999 A1 discloses a system and method for providing high capacity voice and high speed data communication between user equipment terminals and a public network. According to a first aspect of the present invention, there is provided a base station for a cellular wireless communications network, comprising:
a first interface for enabling connection with a plurality of remote communications devices using a cellular wireless communications protocol in the cellular wireless communications network;
a second interface for enabling connection over a local area network and over a wide area network;
and further comprising:
   software for enabling communication over the wide area network between the remote communications devices, connected to the first interface, and a core network of the cellular wireless communications network; and
   software for enabling communication over the local area network between the remote communications devices, connected to the first interface, and devices connected to the local area network, without passing traffic through the core network of the cellular wireless communications network,
   wherein the base station has a MSISDN number, and
   wherein the base station is configured to cause all remote communications devices connected over the first interface to ring until one of them is answered, when the MSISDN number of the base station is called.

This has the advantage that the user is able to communicate with a device connected to the local area network, without needing to pass traffic through the core network of
the cellular wireless communications network, and thus reducing the load on the core network, while also allowing the user to be contacted with minimum effort. Preferably, the base station in accordance with the invention uses a part of the radio frequency spectrum that is shared with other base stations in the cellular wireless communications network. These base stations may serve macrocells, microcells, picocells, or even "femtocells", in the public, wide area network.

Preferably, the base station is able to perform ciphering of communications with the remote communications device through the first interface.

Preferably, the base station is able to perform interworking between a function available on the core network of the cellular wireless communications network and a remote communications device not enabled for that function, such that the remote communications device is able to access the function.

According to a second aspect of the present invention, there is provided a cellular wireless communications network comprising a base station as claimed in one of claims 1 to 3, and further including a management node, which is configured to define the or each device, connected to the local area network, with which the remote communications devices connected to the first interface are adapted to communicate without passing traffic through the core network of the cellular wireless communications network.

### BRIEF DESCRIPTION OF DRAWINGS

Figure 1 is a block schematic diagram of a system incorporating a basestation in accordance with the present invention.
Figure 2 is a block schematic diagram illustrating the hardware architecture of a basestation in accordance with the present invention.
Figure 3 is a block schematic diagram Illustrating the software architecture of a basestation in accordance with the present invention.
Figure 4 is a diagram illustrating the interconnections enabled by the basestation in accordance with the present invention.

### DETAILED DESCRIPTION OF PREFERRED EMBODIMENTS

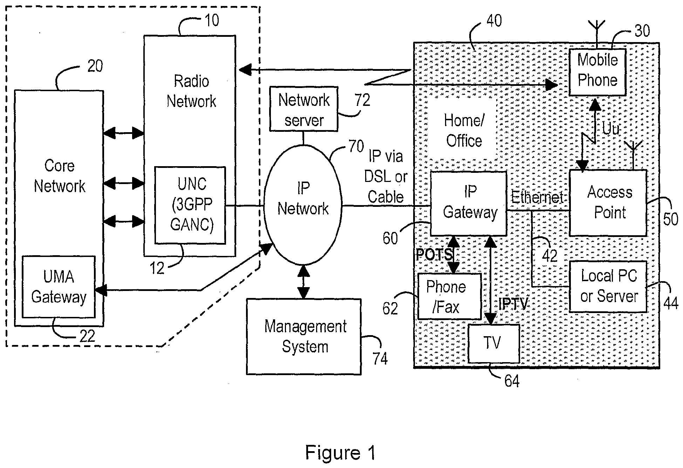

Figure 1 is a block schematic diagram, illustrating a system architecture. A mobile network operator (MNO) owns and operates a wireless communications network, including a radio network 10, including a network of cellular basestations (not shown), and a core network 20, having a connection into the fixed telephone network. These are generally conventional, except as described below.

A mobile phone 30, when roaming in the territory covered by the wireless communications network, is able to establish a wireless connection with one of the cellular basestations, in order to communicate with other telephones in the fixed telephone network, or with other mobile phones, which have established their own wireless connections with a cellular basestation, and hence with the fixed telephone network.

In accordance with the present invention, there is provided, for example within a home or office 40 or in another location where additional wireless coverage is required, a further basestation, or access point, 50. This access point 50 is provided for use by the owner of the premises where it is located, but is integrated into the wireless communications network. That is, the access point shares the part of the radio frequency spectrum allocated to that wireless communications network, by having allocated to it, either permanently or temporarily, some of the group of channels. This group of channels is thus shared with other basestations, which may serve macrocells, microcells, picocells, or even "femtocells", in the public, wide area network. As a result, the mobile phone 30 can roam from the access point 50 to another basestation when leaving the immediate vicinity of the access point 50, or can roam to the access point 50 from another basestation when returning to the immediate vicinity of the access point 50.

The access point 50 therefore acts as a basestation within the relevant wireless communications network. For example, it can allow an entirely conventional and unmodified mobile phone 30 or other user device to establish a connection for voice and/or data services using GSM/GPRS and/or UMTS air interfaces. Of course, the access point 50 can be enabled to establish connections with the mobile phone 30 using the standard air interface of any suitable cellular wireless communications system.

The access point 50 has a connection for an Ethernet Local Area Network (LAN) 42, within the home or office 40. As shown in Figure 1, the access point 50 can connect over the Ethernet LAN 42 to one or more local PCs or servers 44.

The access point 50 can connect over the Ethernet LAN 42 to an IP gateway device 60. The IP gateway device 60 provides an IP connection over an IP network 70, for example the internet, to the MNO network either via a Digital Subscriber Line (DSL) or via other IP transport methods such as a digital multimedia Cable network. Thus, the existing IP connection from the home or office can be used to provide backhaul from the access point 50. Flexible interfacing to the operator's core network 20 can be provided via connections to either the MNO Core Network or Radio Access Network, using the UMA standard through a UMA gateway 22. This approach enables low-cost transport of data and voice using Voice-over-Internet Protocol (VoIP) techniques.

The connection from the IP gateway 60 over the IP network 70 into the MNO Radio Access Network 10 is provided by a UMA Unlicensed Network Controller (UNC) 12, which has been standardised by 3GPP as a Generic Access Network Controller (GANC). Other non-standardised solutions to interface to the Radio Access Network 10 could also be employed as an alternative approach. Direct connection to the operator's Core Network can be achieved through use of a SIP Interface between the access point and a suitable gateway such as a SIP Gateway or an IP Multimedia Subsystem.

In this illustrated embodiment, the DSL or cable IP gateway device 60 includes provision for connection of a POTS telephone or fax device 62, and audio/video connections for providing IPTV services to a TV 64. The access point 50 includes a services environment which allows these facilities to be integrated into the MNO network, enabling sophisticated new services for users.

In an alternative implementation of the invention, the access point 50 can be integrated as a component within the IP gateway device 60; an internal IP connection then links the embedded access point component to the router functions within the IP gateway device. This configuration can potentially provide a lower overall cost and is convenient for operators looking to provide gateway units which unify data, fixed voice, multimedia and mobile services.

Thus, while the mobile phone 30 is within the home or office 40, or otherwise within the coverage area of the access point 50, it can connect into the MNO network in the same way as via any other basestation in the cellular wireless communications network.

Figure 1 also shows a network server 72 connected to the IP network 70. As will be appreciated, where the IP network 70 is the internet, a very large number of servers and other devices are connected to the network. As will be described in more detail below, the user of the mobile phone 30 can access such devices by means of the access point 50.

Figure 1 also shows a management system 74, connected to the IP network 70. The management system 74 is provided by the mobile network operator for managing the operation of the access point 50, including controlling the available services.

For example, as mentioned above, and as described in more detail below, a user of the mobile phone 30 can establish a connection through the access point 50 over the Ethernet LAN 42 to one or more local PCs or servers 44, or through the IP gateway device 60 to another device connected thereto, or through the IP gateway device 60 to a network server 72 connected to the IP network 70. These connections can be established without passing traffic over the core network 20 of the wireless communications network. The management system 74 is able to define the devices, or the IP addresses, with which such connections can be established. Then, these connections can be established with only a restricted number of devices or IP addresses, if desired by the mobile network operator.

Also, the management system 74 is able to specify the channels (which may be defined by frequencies, time slots, and/or spreading codes, depending on the particular cellular wireless communications system) allocated to the access point 50. These channels may be allocated semi-permanently, or may be changed regularly, depending on the requirements of the network as a whole.

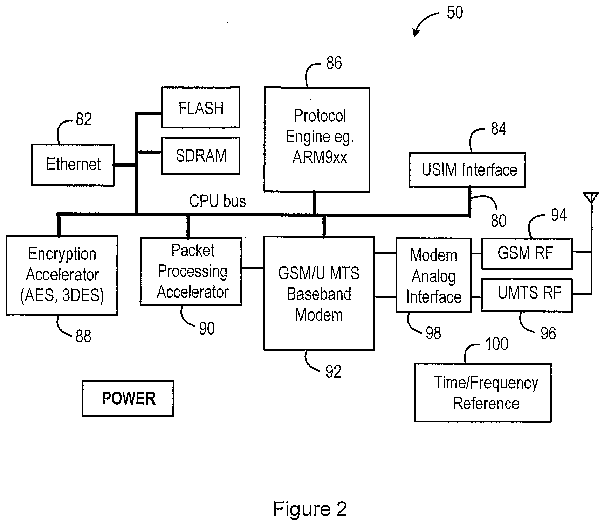

Figure 2 is a block schematic diagram, showing the hardware architecture of the access point 50. The architecture consists of a number of functional blocks interconnected by a processor bus 80 such as the ARM AMBA bus.

The access point 50 includes various external wired interfaces, including an RJ45 Ethernet 10/100 interface 82, which provides a connection to a local LAN for connection to the IP gateway device 60 and thence to the MNO network and the Internet, and also provides access to other devices attached to the Ethernet network, such as one or more PC 44, or such as an IPTV 64 for advanced service provision. The access point 50 can therefore have an IP-based interface to the Radio Access Network 10 through adaptation of the standard UMA UNC, or Core Network via SIP as opposed to the usual lub (UMTS) or Abis (GSM) interfaces.

The access point 50 also includes a UMTS Subscriber Identification Module (USIM) card interface 84 to allow use of a standard UMTS SIM card to provide a unique identifier for the access point 50, in order to identify the unit to the management system 74 and the operator's radio network 10 and core network 20, and thereby enable various services to be provided. GSM SIM or IMS ISIM interfaces could also be used as alternative implementations.

The access point 50 also includes a Protocol Engine 86, implemented as a small embedded CPU such as an ARM926 (with appropriate peripherals) supported by a dedicated co-processor 88 for encryption and a dedicated co-processor 90 for packet processing, which will offload the main CPU for specific intensive tasks. For example, encryption of the IPSec packet payload is handled by the encryption accelerator 88, which supports AES and 3DES encryption protocols. The VPN connection of the access point 50 to the UNC 12 and the management system 74 will make use of the internal encryption processing; user VPN encryption processing may be handled outside the access point 50.

The main CPU is also responsible for the configuration and control, via the main CPU bus 80, of all functional blocks in the system including a baseband modem 92 and the Ethernet port 82. The system software image, including configuration data for all system functional blocks is stored in FLASH memory 94 within the access point 50; two complete system images are stored so that updated system images can be downloaded to the access point 50 from the management system 74, whilst the previous image is retained as a fall back option in case of corrupted download. access point 50

The main CPU peripherals include: watchdog timers for software sanity checking, JTAG and serial ports for in-system debug, and a GPIO for system control including LED status indication, system power management and system alarm gathering.

The access point 50 has a first RF Interface 94 for GSM at either 900MHz or 1800MHz and a second RF Interface 96 for UMTS at 2100MHz. It therefore supports simultaneous operation of GSM and UMTS. For the GSM and UMTS receive paths both uplink (basestation receive) and downlink (terminal receive) frequencies are accessible; for the transmit paths only downlink (basestation transmit) frequencies are available. At installation, the access point 50 selects a downlink RF carrier frequency with the lowest noise/interference for both GSM and UMTS from permitted lists of GSM and UMTS carrier frequencies provided by the management system 74; permitted downlink frequencies will be scanned by the access point 50 with its receive path configured in UE mode and its transmit path disabled.

The access point 50 is designed to provide cellular service over a distance of less than 50m to stationary or pedestrian (for example, no more than 10km/h) users within a building, and hence the transmit power required is dramatically reduced compared to a conventional macrocell basestation. However, the functionality described herein can be provided in any basestation, operating at any power level, and handling any type of mobile user.

The RF interfaces 94, 96 are connected through a modem analog interface 98 to the baseband modem 92, which supports sample rate processing, chip-rate processing (UMTS only) and symbol rate processing for the GSM and UMTS basestation modems.

The access point 50 will have limited GSM Mobile Station (MS) and UMTS User Equipment (UE) modem functionality, in order to allow the access point 50 to recover the Broadcast Channel (BCH) from local GSM/UMTS basestations and other nearby access points. UE modem mode will be entered during initial installation to survey the local RF environment and at regular intervals after the initial installation to monitor the RF environment and, if necessary, modify the access point configuration.

The baseband modem 92 is implemented using a software-based architecture to ensure high adaptability over a field life of up to 5 years, for example, being upgradeable to allow future enhancement to HSDPA or EDGE service to be delivered in the field without the need to replace the unit.

The access point 50 includes timing and frequency references 100 which provide sufficient accuracy for GSM and UMTS basestation operation over a 5 year lifetime.

This embodiment of the access point 50 therefore provides various operational features. For example, it is user installable, self-configuring, and adaptive to the surrounding RF environment. Access can be restricted to specified users using standard GSM/UMTS protocols. Further, multiple access point units installed in a large indoor area connected to a common Ethernet LAN can manage handoffs between themselves without the intervention of other systems in the radio network 10 or the core network 20 of the operator's cellular network.

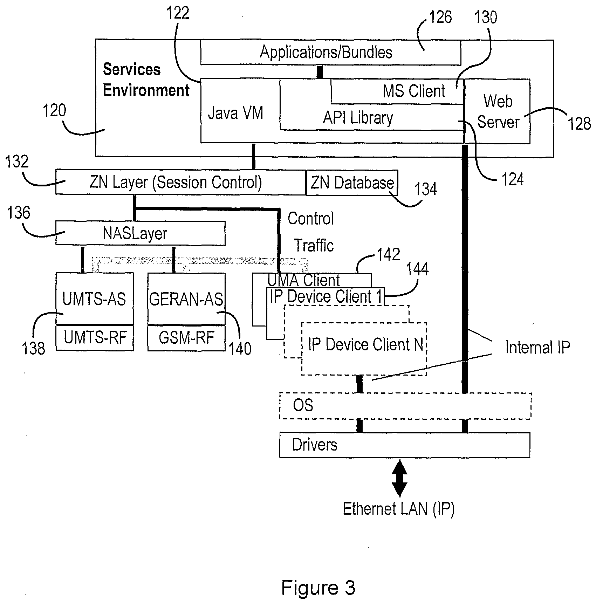

Figure 3 provides a conceptual overview of the architecture of the software running on the protocol engine 86 of the access point 50, together with the encryption accelerator 88 and the packet processing accelerator 90, with an emphasis on the Services Environment and its control paths into the lower stack layers.

The access point 50 includes a services platform, which can exploit the potential of the union of four data networks, namely the external MNO core network 20, the external internet 70, mobile devices such as the mobile phone 30 (via GSM/UMTS), and the home network (via Ethernet).

The access point stack architecture includes a powerful services environment 120. The services environment is Java-based and includes a Java Virtual Machine 122, and an access point library 124, in the form of an API interface which allows applications 126 to interact with the lower layers of the stack to control calls/data sessions, traffic routing and many other functions. The services environment 120 also includes a web server 128, which provides a convenient interface to the user for configuration and monitoring and also for selection and purchase of desired applications, with security protected options for debug and maintenance via a local PC. The services environment 120 also includes a management system (MS) client 130, which configures the access point 50 and monitors various aspects of its operation. The MS client 130 controls the provisioning system so that any component of the software in the system, as shown in Figure 3, can be replaced and restarted.

As mentioned above, the services environment 120 also includes various applications 126, for example created by the mobile network operator or the IP gateway 60 provider, which can be pre-installed in the access point 50, or can be delivered via download from the operator's network at the operator's initiation or at user request, for example as part of a chargeable service.

A network (ZN) layer 132 of the software provides session control functions to manage and implement the service flows and policies that determine how the access point 50 is configured and operates for any particular Mobile Network Operator (MNO) configuration and end-user settings. Configuration parameters are loaded to the ZN database 134 via the management system (MS) client 130, Java applications or via the Web Server 128. These parameters provide the "rules" for the session control operation within the access point. Session control functions include: implementation of the policies for registration, call control and traffic flow/routing for the access point 50 on the MNO core network; control of the UMA client (to be described further below) for registration, call control and traffic flow; and efficient management of access point ZAP resources in delivering GSM/UMTS services and interacting with other services via the IP gateway 60.

Below the network (ZN) layer 132 of the software, there is the Non Access Stratum (NAS) functionality 136, which is required in order for services to be provided to the UE when the MNO GSM/UMTS core network 20 is not connected to the access point 50. This functionality enables the access point 50 to offer the usual GSM/UMTS services, such as SMS and MMS which mobile users are accustomed to, whilst not being connected to the GSM/UMTS core network in the conventional manner. In order for such services to be offered, the access point 50 contains a condensed subset of the core network functions usually contained in the Mobile Switching Centre (MSC), Serving GPRS Service Node (SGSN), GSM Basestation Subsystem (BSS), and UMTS Radio Network Subsystem (RNS).

The Non-Access Stratum layer 136, as implemented in the access point 50, therefore provides various functions which are typically included in MSC and SGSN nodes within a conventional GSM/UMTS network. One such feature is call control (CC). This supports call establishment between two peer entities, mainly for circuit-switched connections.

The NAS layer 136 also provides session management (SM), for control of packet data sessions; Short Message Service (SMS) function, for transmission of SMS messages between the access point 50 and the network SMS service centre; supplementary services (SS), such as call waiting, call holding, and multi-party calling; Mobility Management/GPRS Mobility Management (MM/GMM), for management of UE mobility elements, such as location registration, authentication, and ciphering; and control functions associated with the USIM card which may be fitted to the access point 50. The access point 50 also provides packet routing capability, which is essentially GGSN functionality in a conventional network.

Below the NAS functionality, there is the Access Stratum functionality, specifically the UMTS Access Stratum functions 138 and the GERAN Access Stratum functions 140.

The UMTS Access Stratum functionality 138 comprises some SGSN functionality, Radio Network Controller (RNC) functionality and an interface to the UMTS physical layer implemented on the baseband modem 92. The RNC and physical layer interface functionality is required for all access point services supporting UMTS, regardless of the core network interface used.

In more detail, the Access Stratum functionality comprises the following elements:

### Packet Data Convergence Protocol (PDCP)

Header compression and decompression of IP data streams (optional), transfer of user data, maintenance of PDCP sequence numbers (typically part of an SGSN function).

### Radio Resources Control (RRC)

Broadcast of information related to the NAS and AS; establishment, maintenance and release of RRC connections; establishment, reconfiguration and release of Radio Bearers and radio resources; RRC connection mobility functions; control of requested QoS; UE measurement reporting and control; outer loop power control; ciphering control.

### Radio Link Control (RLC)

Transmission and reception of signaling and data packets, including buffering, segmentation and concatenation of packets. Comprises three entity types, for acknowledged mode, unacknowledged mode, and transparent modes.

### Medium Access Control (MAC)

Mapping between logical channels and transport channels, selection of the appropriate Transport Formats for each Transport Channel, priority handling between UEs, multiplexing/demultiplexing of upper layer PDUs to/from transport block (sets) on common and dedicated transport channels.

### UMTS Layer 1

Interface to the UMTS modem functions implemented on the Baseband Modem.

The GERAN access stratum functionality 140 comprises BSS and some limited SGSN functionality. The BSS functionality is required for support of all GSM/GPRS/EDGE services, regardless of the interface used between the access point 50 and the MNO core network 20.

The SGSN functionality of the GERAN access stratum functionality 140 comprises the following elements:

### Sub-Network Dependent Convergence Protocol (SNDCP)

Multiplexing of several packet data protocols; data compression/decompression (optional); header compression/decompression (optional); segmentation and reassembly.

### Logical Link Control (LLC)

LLC provides peer-to-peer unacknowledged and acknowledged data transfer, and the GPRS ciphering functionality.

The BSS functionality of the GERAN access stratum functionality 140 comprises the following elements:

### Radio Link Control/Medium Access Control (RLC /MAC)

RLC/MAC supports acknowledged and unacknowledged modes; segmentation and reassembly of LLC PDUs; multiplexing to several physical channels; broadcast of system information.

### Radio Resource Management (RR)

RR connection establishment, maintenance, and releases; system information broadcast; packet data resource management.

### GSM/GPRS Layer 1

Interface to the GSM/GPRS/EDGE modem functions implemented in the Baseband Modem.

Thus, as described above, the access point 50 includes some functionality typically located in the higher levels of the Radio Access Network for UMTS and GSM standards. This is partly because, in order to be able to route data traffic to the MNO core network, or to the internet or to devices on the local area network, the access point 50 must have access to the data packets flowing to and from the remote devices. However it is highly desirable that the air interface to the cellular devices is secured by the same ciphering mechanisms used in the rest of the cellular network. Therefore, if it is required to maintain this, then, in order to enable the service and routing capabilities described above, the access point 50 should contain the termination function for the air interface ciphering (namely, the RLC/MAC layer in UMTS).

The software running in the access point 50 also includes a UMA client 142, allowing the access point 50 to use the UMA protocol in a non-standard configuration. Specifically, the standard UMA protocol is designed to enable a GSM MS or UMTS UE, which includes a UMA client and an unlicensed spectrum air interface such as IEEE802.11b/g or Bluetooth, to communicate with the GSM/UMTS core network using unlicensed spectrum. However, the implementation in the access point 50 uses the UMA client as part of the network interface of a GSM/UMTS base station, so that the UMA protocols, developed to communicate with a GSM/UMTS core network via an Unlicensed Network Controller (UNC), can be adapted to manage calls handled by that base station, including handover to/from the macro network. As noted previously, a SIP Interface can be used as an alternative approach.

The access point 50 also includes one or more IP device clients 144, to enable the transfer of calls, control information or data between the "mobile domain" (mobile phones camped onto the access point 50 and traffic paths into the MNO core network 20) and other IP devices, such as a VoIP/POTS port within the IP gateway 60 for fixed-line phone/fax services, an AV port within the IP gateway 60 for IPTV and/or video services, PC's or Servers 44 on the local Ethernet LAN, or remote webpages and/or servers 72 accessible over the internet 70 via the IP gateway 60.

Each IP device client 144 has access to the traffic path within the access point 50 and can be controlled by the session controller in the ZN layer 132, which can initiate and terminate calls/data sessions with the accessible IP devices. The inclusion within the access point 50 software architecture of IP device clients which are specific to a particular device or service enables traffic from that particular device or service to be routed within the access point 50, such that it can be connected to the GSM/UMTS mobile devices accessed via the GSM or UMTS Access Strata or the MNO Core Network accessed via the UMA client.

Further, each IP device client 144 has access to the other devices on the LAN, and also has access to other devices accessible over the internet 70. For example, by using the appropriate IP device client 144, a POTS phone connected to the access point 50 can be connected over the internet 70 to another POTS phone, in order to make a voice call.

Moreover, each IP device client 144 also has access to the mobile network of the MNO. Specifically, any device connected to the LAN 42, or any device connected to the IP gateway 60, can have an IP device client 144 that can associate itself with the USIM card connected to the USIM interface 84. From the point of view of the MNO network, any such device then appears to be a mobile, and will be allowed access to the MNO network. As a result, a variety of services can be provided to the user, by providing a device with appropriate desired functionality, and then using the USIM card to allow the device to connect over the MNO core network to one or more other devices.

A further use of the USIM card, connected to the USIM interface 84, is to allow the mobile phones camped onto the access point to work in a similar way to a multi-extension cordless telephone system. In this particular service configuration, the USIM card within the access point 50 carries an IMSI identifier and an MSISDN number which in fact defines a phone number for the home or office within which the access point 50 is installed, although it appears within the mobile network operator's system as a mobile number. When the MSISDN number of the USIM card in the access point 50 is called, all mobile phones camped onto the access point 50 are rung until one of them is answered. In this way, incoming calls to an individual person would be directed to the MSISDN number of that individual's mobile phone, and can therefore be differentiated from calls which are intended for any of the users in that home or office by the MSISDN number which is called. The call handling functionality of the access point 50 then changes when the MSISDN number of the access point itself is called.

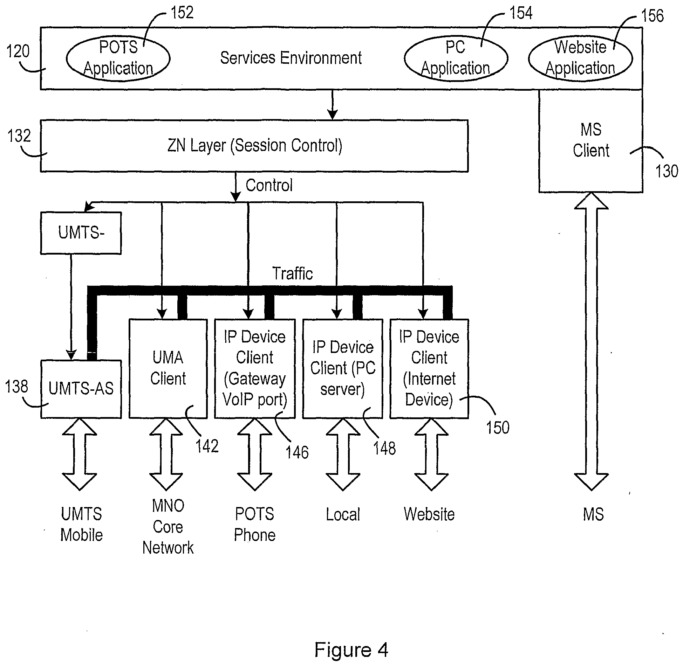

Figure 4 is a schematic diagram, illustrating the traffic and control interconnections that are enabled, in one embodiment of the invention. In the embodiment illustrated in Figure 4, the software includes three IP device clients, namely a first IP device client 146 that can connect through a VoIP port of the IP gateway 60 to a POTS phone 62, a second IP device client 148 that can connect over the LAN to a local PC or server 44, and a third IP device client 150 that can connect over the IP network 70 to a website on an internet device 72. The services environment 120 then includes a POTS application 152, a PC application 154 and a website application 156 corresponding to these three IP device clients. In such cases, it is also likely that application software, specific to the particular service, will be required in the device which is to be connected to, such as the IP gateway 60, the local PC 44, or the GSM/UMTS mobile device 30. Suitable application software can be provided by the MNO that operates the access point 50, in order to facilitate the desired overall service.

Applications operating within the services environment 120 are then able to initiate and terminate calls or data sessions with the mobiles camped on the access point 50 and the MNO core network 20 and, via the IP device clients, are able to access and control services within the gateway, devices connected to the Ethernet LAN and remote devices accessible via the Internet. The user is also able to interact with the management system 74 through the MS client 130.

The control of the initiation and termination of the "calls" or connections is handled by a Java application specific to the service which is executing within the access point 50 services environment. Functions provided within the API library (shown in Figure 3 above) of the access point 50 permit call control and routing via session control implemented in the network layer 132 of the access point 50.

As mentioned above, the access point 50 performs the air interface ciphering, which is conventionally performed not in the base station of a cellular network, but in the core network. This means that the access point 50 is able to determine the type of call that is in progress. This in turn allows the access point 50 to provide additional services to a camped-on mobile device.

For example, applications running in the service environment can be used to supplement the capabilities of the mobile phones camped on to the access point 50. For example, legacy GSM and UMTS mobiles can take advantage of new service capabilities available through systems such as IMS, while they are camped onto the access point 50. The access point 50 can act as an interworking function or "proxy" between the new core network service platform and the legacy mobile device. For example, so called presence-based services which provide Instant Messenger (IM) functionality are planned to be available in future handsets as IMS is deployed in networks. However, the user will be required to replace their handset with a compatible device in order to make use of these services. An access point application can instead provide interworking between the legacy mobile device and the new core network presence services platform; the users "presence" on the network is indicated when the user's mobile roams onto the access point 50. Instant Messages sent to the user camped onto the access point 50 can be translated by the access point into conventional SMS messages, which are then transmitted to the user. Similarly, return SMS messages from the user camped onto the ZAP can be converted into other message formats for transmission back to the core network.

Another application of the same principle might be a "push-to-talk" capability, where the access point 50 provides an interworking function between a legacy mobile device and central call-servers within the MNO core network.

Thus, the services environment 120, located within a home or office based access point 50, effectively joins four distinct networks, namely the MNO Core Network 20 (via the IP gateway 60), the internet (again via the IP gateway 60), the local LAN (via the Ethernet port), and local mobile devices camped on the access point 50 (via a GSM or UMTS air interface).

For example, this allows various service options.

A direct connection can be made between GSM/UMTS mobile devices camped on the access point 50 and devices attached to the local Ethernet LAN network such as PCs/Servers, webcams and other home security and/or home automation sensors and actuators. This connection is local to the access point 50 and does not require the involvement of the MNO core network to carry the traffic.

A direct connection can be made between GSM/UMTS mobile devices camped on the access point 50 and the Internet without the need for MNO Core Network involvement. This allows GSM/UMTS mobile devices to access webpages and internet content without burdening the core network 20 with this traffic, and therefore has the advantage for the MNO that its infrastructure costs can potentially be lower.

A direct connection can be made between GSM/UMTS Mobile devices camped on the access point 50 and GSM/UMTS devices camped on other access points accessible directly via the Internet. This capability allows information such as presence of a user on their home access point 50 or voice/video calls to be conveyed directly from one access point to another access point over the Internet without the involvement of the MNO core network 20 in carrying the traffic.

A direct connection can be made between the MNO core network 20 and devices or applications within the IP gateway device 60 and other devices or applications connected to the local Ethernet LAN network. This capability would for example allow:
i. the VoIP/POTS port on the IP gateway device 60 to be used to make phone calls within the MNO network using the USIM card within the access point 50 to define the "mobile number" and other necessary details of the POTS phone;
ii. the IPTV port on the IP gateway device 60 to be used to display incoming video calls, mobile TV streams or MMS messages on the connected TV screen;
iii. a user, roaming in the MNO wide-area network, to access his home PC or server, or home security and/or automation devices attached to the local Ethernet LAN via his GSM/UMTS mobile device and the MNO core network 20 and MNO radio network 10.

The access point 50 can therefore provide improved services to users, while reducing costs for the mobile network operator.

## Claims

1. A base station (50) for a cellular wireless communications network, comprising:
a first interface (98) for enabling connection with a plurality of remote
communications devices using a cellular wireless communications protocol in the cellular wireless communications network; and
a second interface (82) for enabling connection over a local area network and over
a wide area network;
and further comprising:
software (142) for enabling communication over the wide area network between the remote communications devices, connected to the first interface, and a core network (20) of the cellular wireless communications network; and
software (148) for enabling communication over the local area network between the remote communications devices, connected to the first interface, and devices (44) connected to the local area network, without passing traffic through the core network of the cellular wireless communications network,
wherein the base station has a MSISDN number, and
wherein the base station is configured to cause all remote communications devices connected over the first interface to ring until one of them is answered, when the MSISDN number of the base station is called.

2. A base station as claimed in claim 1, wherein the base station is adapted to perform ciphering of communications with the remote communications devices through the first interface.

3. A base station as claimed in claim 2, wherein the base station is adapted to perform interworking between a function available on the core network of the cellular wireless communications network and a remote communications device not enabled for that function, such that the remote communications device is able to access said function.

4. A cellular wireless communications network, comprising a base station as claimed in one of claims 1 to 3, and further including a management node, which is configured to define the or each device, connected to the local area network, with which the remote communications devices connected to the first interface are adapted to communicate without passing traffic through the core network of the cellular wireless communications network.

5. A cellular wireless communications network as claimed in claim 4, wherein the management node is adapted to specify channels of said cellular wireless communications network allocated to the base station.

## Patentansprüche

1. Basisstation (50) für ein zellulares Drahtloskommunikationsnetz, aufweisend:
eine erste Schnittstelle (98) zum Ermöglichen einer Verbindung mit einer Mehrzahl von Fernkommunikationsvorrichtungen mittels eines zellularen Drahtloskommunikationsprotokolls im zellularen Drahtloskommunikationsnetz; und
eine zweite Schnittstelle (82) zum Ermöglichen einer Verbindung über ein lokales Netzwerk und über ein Weitverkehrsnetz;
und des Weiteren aufweisend:
Software (142) zum Ermöglichen von Kommunikation über das Weitverkehrsnetz zwischen den Fernkommunikationsvorrichtungen, die mit der ersten Schnittstelle verbunden sind, und einem Kernnetz (20) des zellularen Drahtloskommunikationsnetzes; und
Software (148) zum Ermöglichen von Kommunikation über das lokale Netzwerk zwischen den Fernkommunikationsvorrichtungen, die mit der ersten Schnittstelle verbunden sind, und Vorrichtungen (44), die mit dem lokalen Netzwerk verbunden sind, ohne Datenverkehr durch das Kernnetz des zellularen Drahtloskommunikationsnetzes zu leiten,
wobei die Basisstation eine MSISDN-Nummer hat, und
wobei die Basisstation dafür konfiguriert ist, alle Fernkommunikationsvorrichtungen, die über die erste Schnittstelle verbunden sind, zum Läuten zu bringen, bis eine davon beantwortet wird, wenn die MSISDN-Nummer der Basisstation angerufen wird.

2. Basisstation nach Anspruch 1, wobei die Basisstation dafür ausgelegt ist, ein Chiffrieren der Kommunikation mit den Fernkommunikationsvorrichtungen durch die erste Schnittstelle durchzuführen.

3. Basisstation nach Anspruch 2, wobei die Basisstation dafür ausgelegt ist, ein Interworking zwischen einer Funktion, die im Kernnetz des zellularen Drahtloskommunikationsnetzes verfügbar ist, und einer Fernkommunikationsvorrichtung, für die diese Funktion nicht ermöglicht ist, durchzuführen, sodass die Fernkommunikationsvorrichtung auf die Funktion zugreifen kann.

4. Zellulares Drahtloskommunikationsnetz, aufweisend eine Basis-station nach einem der Ansprüche 1 bis 3, und des Weiteren beinhaltend einen Verwaltungsknoten, der dafür konfiguriert ist, die oder jede Vorrichtung zu definieren, verbunden mit dem lokalen Netzwerk, mit der/denen die Fernkommunikationsvorrichtungen, die mit der ersten Schnittstelle verbunden sind, ausgelegt sind, zu kommunizieren, ohne Datenverkehr durch das Kernnetz des zellularen Drahtloskommunikationsnetzes zu leiten.

5. Zellulares Drahtloskommunikationsnetz nach Anspruch 4, wobei der Verwaltungsknoten dafür ausgelegt ist, Kanäle des zellularen Drahtloskommunikationsnetzes vorzugeben, die der Basisstation zugeteilt sind.

## Revendications

1. Station de base (50) pour un réseau de communication sans fil cellulaire, comprenant :
une première interface (98) pour permettre une connexion avec une pluralité de dispositifs de communication à distance à l'aide d'un protocole de communication sans fil cellulaire dans le réseau de communication sans fil cellulaire ; et
une seconde interface (82) pour permettre une connexion sur un réseau local et sur un réseau étendu ;
et comprenant en outré :
un logiciel (142) pour permettre une communication sur le réseau étendu entre les dispositifs de communication à distance, connectés à la première interface, et un réseau central (20) du réseau de communication sans fil cellulaire ; et
un logiciel (148) pour permettre une communication sur le réseau local entre les dispositifs de communication à distance, connectés à la première interface, et des dispositifs (44) connectés au réseau local, sans faire passer du trafic à travers le réseau central du réseau de communication sans fil cellulaire,
dans laquelle la station de base possède un numéro MSISDN, et
dans laquelle la station de base est configurée pour amener tous les dispositifs de communication à distance connectés sur la première interface à sonner jusqu'à ce que l'on réponde à l'un d'eux, lorsque le numéro MSISDN de la station de base est appelé.

2. Station de base telle que revendiquée à la revendication 1, dans laquelle la station de base est conçue pour réaliser un chiffrement de communications avec les dispositifs de communication à distance par l'intermédiaire de la première interface.

3. Station de base telle que revendiquée à la revendication 2, dans laquelle la station de base est conçue pour réaliser une interconnexion de réseaux entre une fonction disponible sur le réseau central du réseau de communication sans fil cellulaire et un dispositif de communication à distance non activé pour cette fonction, de telle sorte que le dispositif de communication à distance est apte à accéder à ladite fonction.

4. Réseau de communication sans fil cellulaire, comprenant une station de base telle que revendiquée à l'une des revendications 1 à 3, et comprenant en outre un noeud de gestion, qui est configuré pour définir le ou chaque dispositif, connecté au réseau local, avec lequel les dispositifs de communication à distance connectés à la première interface sont conçus pour communiquer sans faire passer du trafic à travers le réseau central du réseau de communication sans fil cellulaire.

5. Réseau de communication sans fil cellulaire tel que revendiqué à la revendication 4, dans lequel le noeud de gestion est conçu pour spécifier des canaux dudit réseau de communication sans fil cellulaire alloués à la station de base.
